(19) Europäisches Patentamt
European Patent Office
Office européen des brevets

(11) **EP 4 668 831 A1**

(12) **EUROPEAN PATENT APPLICATION**
published in accordance with Art. 153(4) EPC

(43) Date of publication:
**24.12.2025 Bulletin 2025/52**

(21) Application number: **24757336.3**

(22) Date of filing: **16.02.2024**

(51) International Patent Classification (IPC):
$H04W\ 24/08^{(2009.01)}$    $H04W\ 76/18^{(2018.01)}$
$H04W\ 72/231^{(2023.01)}$    $H04W\ 72/232^{(2023.01)}$
$H04W\ 52/02^{(2009.01)}$    $H04B\ 7/06^{(2006.01)}$
$H04B\ 7/08^{(2006.01)}$    $H04L\ 5/00^{(2006.01)}$

(52) Cooperative Patent Classification (CPC):
**H04B 7/06; H04B 7/08; H04L 5/00; H04W 24/08; H04W 52/02; H04W 72/231; H04W 72/232; H04W 76/18**

(86) International application number:
**PCT/KR2024/095349**

(87) International publication number:
**WO 2024/172626 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 KR 20230021060**

(71) Applicant: **LG Electronics Inc.**
**Yeongdeungpo-gu**
**Seoul 07336 (KR)**

(72) Inventors:
• **LEE, Youngdae**
Seoul 06772 (KR)
• **KIM, Seonwook**
Seoul 06772 (KR)
• **KANG, Jiwon**
Seoul 06772 (KR)
• **YANG, Suckchel**
Seoul 06772 (KR)
• **MYUNG, Sechang**
Seoul 06772 (KR)

(74) Representative: **Plasseraud IP**
**104 Rue de Richelieu**
**CS92104**
**75080 Paris Cedex 02 (FR)**

(54) **METHOD AND DEVICE FOR MONITORING RADIO LINK AND DETECTING FAILURE IN WIRELESS COMMUNICATION SYSTEM**

(57) Disclosed are a method and device for monitoring a radio link and detecting a failure in a wireless communication system. A method performed by a terminal in a wireless communication system according to an embodiment of the present disclosure may comprise the steps of: receiving, from a network, information about at least one of a first radio link monitoring reference signal (RLM-RS) set or a second RLM-RS set; performing RLM for a first period on the basis of the first RLM-RS set; and performing RLM for a second period on the basis of the second RLM-RS on the basis of the application of the second period.

FIG.9

Receive, from network, information about first RLM RS set and/or second RLM RS set — S910

Perform RLM for first period based on first RLM RS set — S920

based on second period being applied, Perform RLM for second period based on second RLM RS set — S930

EP 4 668 831 A1

## Description

[Technical Field]

The present disclosure relates to a wireless communication system, and in more detail, relates to a method and a device for radio link monitoring and failure detection in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and a device for radio link monitoring and failure detection in a wireless communication system.

The additional technical problem of the present disclosure is to provide a method and a device for radio link monitoring and failure detection in a wireless communication system to which network energy saving (NES) is applied.

The technical objects to be achieved by the present disclosure are not limited to the above-described technical objects, and other technical objects which are not described herein will be clearly understood by those skilled in the pertinent art from the following description.

[Technical Solution]

A method performed by a terminal in a wireless communication system according to an aspect of the present disclosure may include receiving, from a network, information about at least one of a first radio link monitoring reference signal (RLM-RS) set or a second RLM-RS set; performing RLM for a first period based on the first RLM-RS set; and based on a second period being applied, performing RLM for the second period based on the second RLM-RS set.

A method performed by a base station in a wireless communication system according to an additional aspect of the present disclosure may include transmitting, to at least one terminal, information about at least one of a first radio link monitoring reference signal (RLM-RS) set or a second RLM-RS set; and receiving a result of RLM based on at least one of the first RLM-RS set or the second RLM-RS set from one terminal of the at least one terminal. The result of the RLM may include at least one of a result of RLM for a first period based on the first RLM-RS set or a result of RLM for a second period based on the second RLM-RS set. The RLM for the second period may be performed based on the second period being applied.

[Technical Effects]

According to the present disclosure, a method and a device for radio link monitoring and failure detection in a wireless communication system may be provided.

According to the present disclosure, a method and a device for radio link monitoring and failure detection in a wireless communication system to which network energy saving (NES) is applied may be provided.

Effects achievable by the present disclosure are not limited to the above-described effects, and other effects which are not described herein may be clearly understood by those skilled in the pertinent art from the following description.

[Brief Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram for describing an example of a RLM and RLF detection operation according to the present disclosure.

FIG. 8 shows an example of a configuration a CSI-RS resource set according to the present disclosure.

FIG. 9 is a diagram for describing an example of a radio link monitoring operation of a terminal according to the present disclosure.

FIG. 10 is a diagram for describing an example of an operation supporting radio link monitoring of a terminal by a base station according to the present disclosure.

FIG. 11 illustrates a block diagram of a wireless communication system according to an embodiment of the present disclosure.

[Mode for Invention]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator

- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

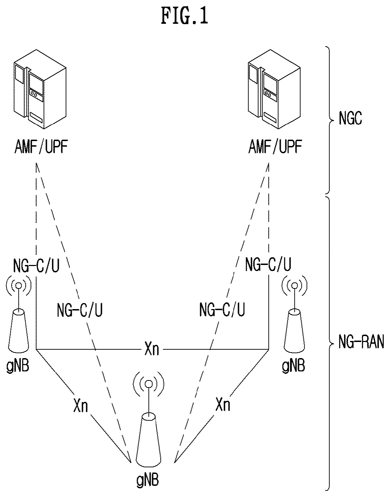

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

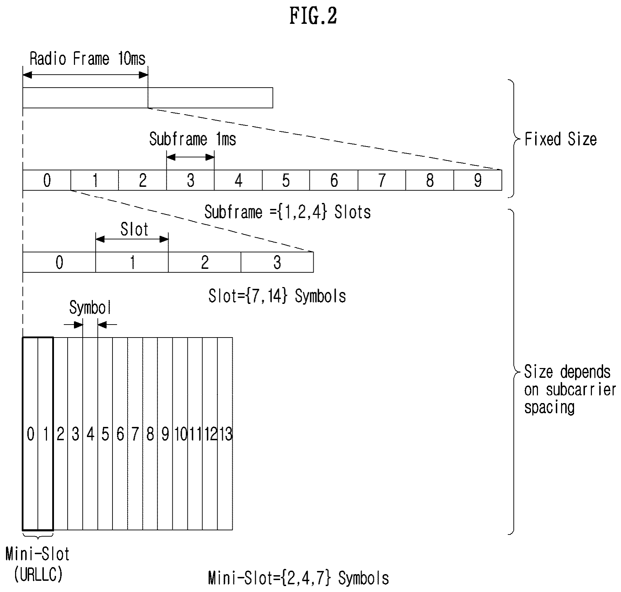

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |

(continued)

| μ | Δf=2^μ·15 [kHz] | CP |
|---|---|---|
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot10^3$ Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^{\mu}\in\{0,...,N_{slot}^{subframe,\mu}-1\}$ in a subframe and are numbered in an increasing order of $n_{s,f}^{\mu}\in\{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

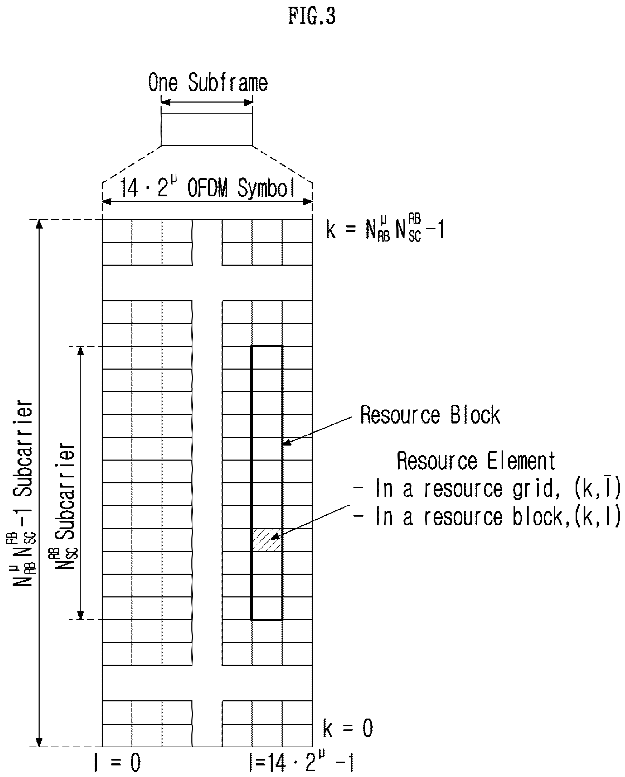

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{9} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $1'=0,...,2^{\mu}N_{symb}^{(\mu)}-1$ refers to a position of a symbol in a subframe. When referring to a resource element in a slot, an index pair (k,l) is used. Here, $1=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

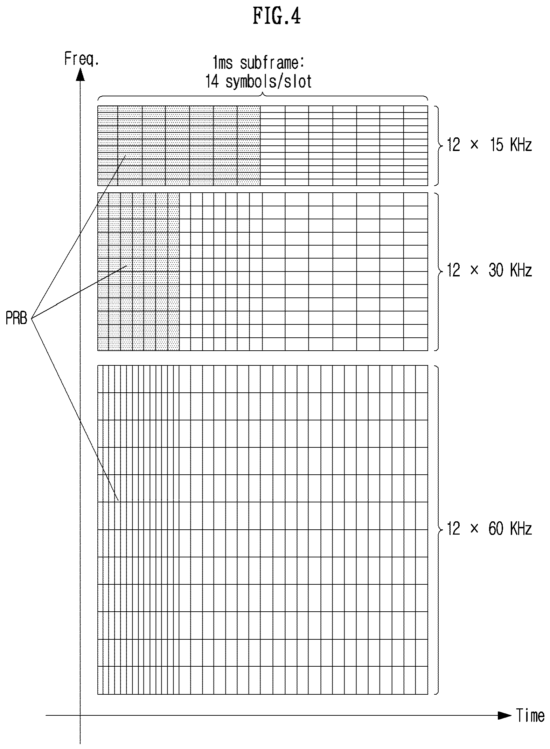

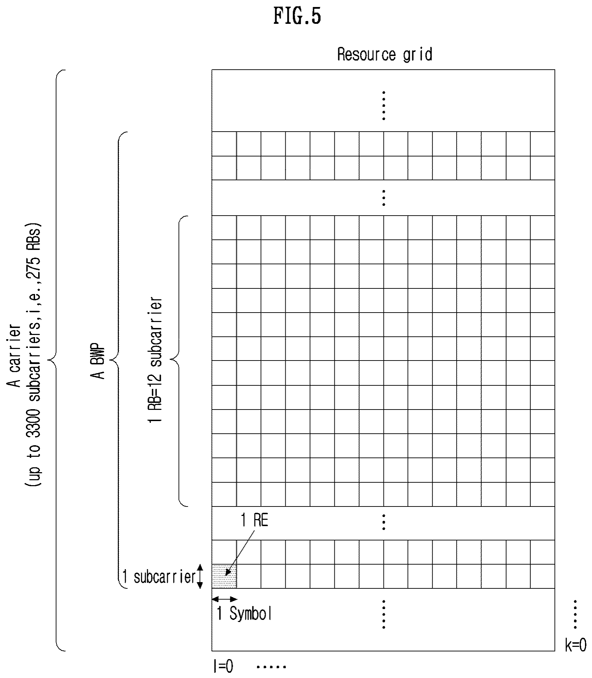

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

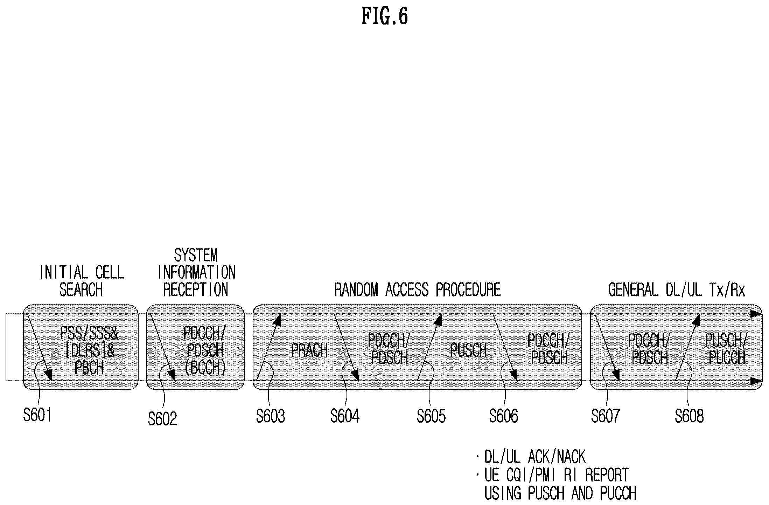

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |

(continued)

| DCI Format | Use |
|---|---|
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Radio link monitoring (RLM) procedure

While monitoring the downlink radio link quality for the primary cell (PCell or PSCell), if it is determined that the radio link quality is degraded below the threshold value, the UE may report the RLM result to the base station.

Specifically, the downlink radio link quality of the primary cell may be monitored by the UE for the purpose of notifying/indicating an out-of-sync state or an in-sync state to a higher layer. The UE does not need to monitor the downlink radio link quality of the BWP other than the active downlink BWP in the primary cell.

If the active downlink BWP is an initial BWP and is for SS/PBCH block and CORESET multiplexing pattern 2 or 3, when the associated SS/PBCH block index is provided by 'RadioLinkMonitoringRS', which is a higher layer parameter, the UE may perform RLM using the associated SS/PBCH block.

And, for the UE, when the secondary cell group (SCG) is configured, the higher layer parameter 'rlf-TimersAndConstants' is provided, and it is configured to not be released, in the SCG, the downlink radio link quality of the PSCell may be monitored by the UE for the purpose of notifying/indicating an out-of-sync state/in-sync state to a higher layer. The UE does not need to monitor the downlink radio link quality in the DL BWP other than the active downlink BWP in the primary secondary cell.

The UE may be provided with the CSI-RS resource configuration index by the higher layer parameter 'csi-RS-Index' or the SS/PBCH block index by 'ssb-Index'.

'powerControlOffsetSS' may not be applied to a CSI-RS resource configuration, and a terminal expects that only 'noCDM' in cdm-Type, only 'one' and 'three' in density, and only '1 port' in 'nrofPorts' will be provided.

When a multi-downlink BWP is configured for the serving cell, the UE may perform a radio link monitoring operation using the RS(s) corresponding to the resource index provided by 'RadioLinkMonitoringRS' for the active downlink BWP. And, if 'RadioLinkMonitoringRS' is not provided for the active downlink BWP, the UE may perform a radio link monitoring operation using RS(s) provided through the active TCI state configured for PDCCH reception in CORESET of the active downlink BWP.

In a non-discontinuous reception (DRX) mode operation, the physical layer of a terminal assesses radio link quality against thresholds (Qout and Qin) configured by 'rlmInSyncOutOfSyncThreshold' once per indication period over a predetermined previous time period. A terminal determines an indication period as the maximum value between the shortest period for a radio link monitoring resource and 10 msec.

In a DRX mode operation, the physical layer of a terminal assesses radio link quality against thresholds (Qout and Qin) configured by 'rlmInSyncOutOfSyncThreshold' once per indication period over a predetermined previous time period. A terminal determines an indication period as the maximum value between the shortest period for a radio link monitoring resource and a DRX period.

In a frame in which radio link quality is evaluated, if the radio link quality is worse than a threshold (e.g., Qout) for all resources of a resource set for radio link monitoring, the physical layer of the UE may indicate to the higher layer that the state of the radio link is out of synchronization ('out-of-sync'). In the frame in which the radio link quality is evaluated, if the radio link quality is better than the threshold Qin for any resource in the resource set for radio link monitoring, the physical layer of the UE may indicate to an higher layer that the state of the radio link is in a synchronized state ('in-sync').

When out-of-sync (OOS) occurs in L1 (layer 1, i.e., PHY), an indication may be sent to L2 (layer 2). When OOS occurs more than the predetermined number of times during a predetermined time period, L2 may be determined to be a radio link failure (RLF). Alternatively, when the number of retransmissions of a radio link control (RLC) packet reaches the maximum value, it may be determined to be a RLF. When a synchronization state (in-sync) (e.g., link recovery) does not occur for a certain period of time after RLF declaration, report therefor may be prepared/updated and a RRC re-establishment process may be performed. This report may be named, e.g., varRLF-Report, and may include identification information on the best SSB and/or CSI-RS resource(s) of neighboring cell(s) configured for a purpose of radio resource management (RRM) and quality information (e.g., a RSRP, a RSRQ, a SINR, etc.). When this report is available, a terminal may report to a network an indication (e.g., via a 1-bit indicator) that information corresponding to the report is available in a completion message of a RRC re-establishment process. For reference, a RRC re-establishment process may include a terminal transmitting a RRC re-establishment request message (e.g., RRCReestablishmentRequest) to a network, a terminal receiving a RRC re-establishment message (e.g., RRCReestablishment) from a network and a terminal transmitting a RRC re-establishment completion message (e.g., RRCReestablishmentComplete) to a network.

Based on report availability indication information from a terminal, a base station may request report information of a terminal (e.g., VarRLF-Report) through a terminal information process after a RRC re-establishment process. A terminal information process may include, for example, a terminal receiving a terminal information request message (e.g., UEInformationRequest) from a network and a terminal transmitting a terminal information response message (e.g., UEInformationResponse) to a network. For example, report information of a terminal (e.g., VarRLF-Report) may be included in a terminal information response message (e.g., UEInformationResponse) and reported to a base station.

A terminal may receive a configuration for a RS for separate RLM for each DL BWP of SpCell (PCell, PSCell) from a base station. In other words, a base station may provide a RRC parameter failureDetectionResourcesToAddModList to a terminal, and a terminal may monitor a RS for RLM according to the RadioLinkMonitoringRS configuration of failureDetectionResourcesToAddModList. The RadioLinkMonitoringRS configuration of failureDetectionResourcesToAddModList provided by a base station may include a CSI-RS resource configuration index (csi-RS-Index) or a SS/PBCH block index (ssb-Index) corresponding to up to $N_{LR-RL}$ CSI-RS resources or SSB resources. A terminal may perform RLM based on up to $N_{RLM}$ RSs (CSI-RSs or SSBs) among up to $N_{LR-RLM}$ CSI-RS resources or SSB resources according to a base station configuration.

When a separate RS (i.e., RadioLinkMonitoringRS) configuration for RLM is not provided to a terminal, a terminal may perform RLM based on the active TCI state applied when receiving a PDCCH. For example, when the TCI state including one or a plurality of CSI-RS resources is provided for receiving a PDCCH, a terminal may perform RLM as follows.

- When the active TCI-state for PDCCH reception includes only one RS, a terminal uses a RS provided for the active TCI-state for a PDCCH for radio link monitoring.
- When the active TCI-state for PDCCH reception includes two RSs, a terminal performs RLM based on one RS having a QCL-TypeD relationship among them. Here, a terminal does not expect that both RSs have a QCL-TypeD relationship.
- A terminal does not use an aperiodic or semi-persistent RS for radio link monitoring. For CSI-RS-based RLM, RLM is performed by using a periodic CSI-RS having a single port restriction.
- When $L_{max}=4$, a terminal prioritizes the TCI state associated with the CORESET of a search space set (SS set) with the shortest monitoring periodicity, and when there are a plurality of CORESETs corresponding to the shortest SS set, a terminal performs RLM by prioritizing the highest CORESET index. Here, $L_{max}$ corresponds to the maximum number of SS/PBCH blocks per half frame.

The value of $N_{LR-RLM}$ and $N_{RLM}$ according to $L_{max}$ may be given as follows.

[Table 6]

| $L_{max}$ | $N_{LR-RLM}$ | $N_{RLM}$ |
|---|---|---|
| 4 | 2 | 2 |
| 8 | 6 | 4 |
| 64 | 8 | 8 |

<u>RLM and RLF Detection Considering Network Energy Saving (NES)</u> A terminal may support reception based on beamforming in receiving a downlink. In other words, a terminal may receive a downlink signal by using a specific beam among a plurality of candidate beams. When a terminal is in a connected mode, a base station and a terminal may maintain an optimal beam for a terminal through a beam management (BM) process. Accordingly, a base station may use an optimal transmission (TX) beam suitable for a terminal to transmit a downlink physical channel (e.g., a PDCCH, a PDSCH, etc.), and a terminal may use an optimal reception (RX) beam to receive a downlink physical channel.

In order to refine a wireless communication system, a method for reducing the power consumption of a network node (e.g., a base station, a cell, a TRP, a relays, etc.) is being discussed. For example, a network node that may use a plurality of TX beams and/or RX beams may perform communication with a terminal through some beams (e.g., CSI-RS resources, SSB resources, etc.)(s) in a specific time period and may not perform communication with a terminal through the remaining beam(s) in order to reduce its power consumption. In addition, a network node may perform communication with a terminal through some other beam(s) in a different time period and may not perform communication with a terminal through the remaining beam(s). In other words, a network node may deactivate (or turn OFF) some beam resource(s) that are the same/different for each time period for NES.

When a terminal performs RLM for an activated beam/RS in a specific time period, whether to detect/declare RLF may be determined as described above based on the quality/measurement results of a corresponding beam/RS. Meanwhile, when a terminal performs RLM for a deactivated beam/RS in a specific time period and accordingly, RLF is detected/declared, such RLM and RLF may correspond to a procedure that is performed unnecessarily. When a network node deactivates a different beam/RS for a plurality of time periods, a situation may frequently occur where a terminal performs unnecessary RLM and accordingly, declares unnecessary RLF.

The present disclosure describes various examples of refining RLM and RLF detection operations of a terminal belonging to a network node supporting NES. Specifically, the present disclosure includes various examples for causing a terminal attempting to connecting or connected with a network node performing a NES operation to perform RLM and detect RLF by applying a different RS according to whether to perform a NES operation. In examples below, it is described by mainly assuming a RLM/RLF operation, but the scope of the present disclosure is not limited thereto, and the examples of the present disclosure may also be applied similarly to a beam/a RS targeted for beam failure detection(BFD)/beam failure recovery(BFR).

In the present disclosure, when a network node operates in a NES mode, it may mean that the following operation is performed. For example, a network node may configure a plurality of periods (i.e., the discontinuous transmission (DTX) periods of a network node) that deactivate/turn off the transmission of specific DL signal(s) during a specific time period in advance. A network node may dynamically indicate one OFF period among a plurality of configured OFF periods to a terminal. A terminal may know that a DL signal associated with a corresponding OFF period will not be transmitted from a network node within an indicated OFF period. Accordingly, the power consumption of a network node and a terminal may be saved.

In a NES mode, an OFF period may be defined in a time, frequency and/or spatial domain. For example, an OFF period may be defined in a time domain, and the time length of a plurality of OFF periods may be the same or different. For example, an OFF period may be defined in a frequency domain through a method such as BWP switching, dynamic RB adaptation, etc. For example, an OFF period may be defined in a spatial domain by semi-statically or dynamically deactivating the specific antenna port of a network node (i.e., a network node does not transmit/receive a radio signal through a corresponding antenna port).

In order to apply a RLM/RLF operation according to the present disclosure, a network node may activate or deactivate a NES mode. For example, when one base station controls a plurality of cells, whether to activate a NES mode may be applied independently for each cell. In addition, a network node may inform a terminal of information about NES activation or deactivation.

Unless otherwise limited in the present disclosure, a configuration for a terminal by a base station may include providing corresponding configuration information to a terminal through higher layer (e.g., RRC) signaling. Unless otherwise limited in the present disclosure, a command/an indication for a terminal by a base station may include providing a corresponding command/indication to a terminal through MAC CE and/or DCI. Unless otherwise limited in the present disclosure, information predefined for a base station and a terminal may include information that is held in advance by a base station and a terminal without separate signaling/command/indication for corresponding information.

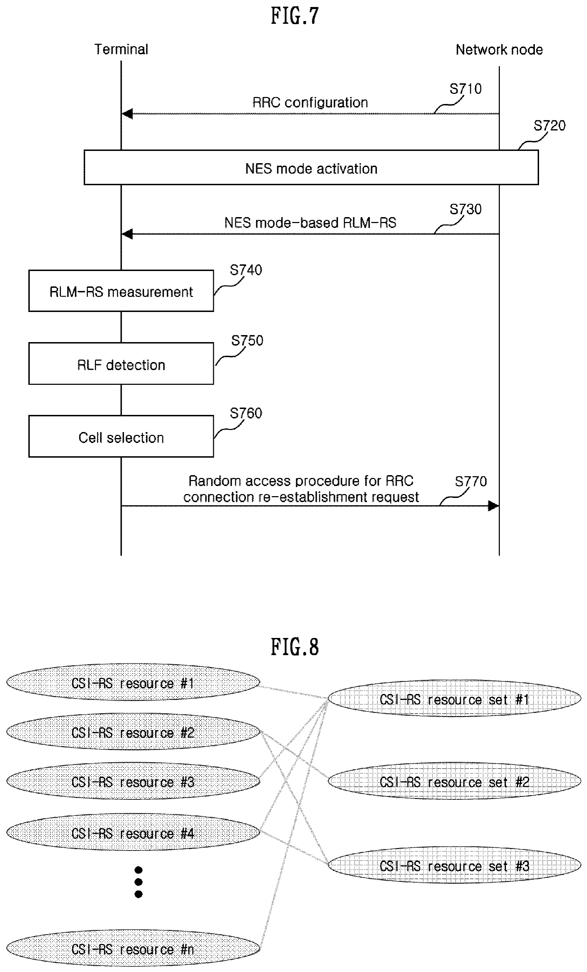

FIG. 7 is a diagram for describing an example of a RLM and RLF detection operation according to the present disclosure.

In S710, a network node may provide a terminal with information related to NES application through a RRC configuration (e.g., information on at least one OFF period (candidate), information on beam/RS resource(s) associated with each OFF period (candidate)).

In S720, a network node may indicate NES mode activation to a terminal. ANES mode activation indication may include indicating at least one OFF period applied to a corresponding terminal among at least one configured OFF period (candidate).

In S730, a network node may transmit NES mode-based RLM-RS(s) to a terminal.

In S740, a terminal may perform measurement on a RLM-RS. In other words, a terminal may perform RLM based on measurement on an activated RS (e.g., RLM-RS) excluding a RS that is deactivated in a corresponding OFF period in each of the OFF period(s) indicated to itself.

In S750, a terminal may determine whether RLF is detected based on a RLM result, and when RLF is detected, may declare RLF to a higher layer.

In S760, a terminal may perform a cell selection procedure due to RLF detection, and in S770, a terminal may perform a random access procedure (e.g., PRACH transmission) for requesting RRC connection re-establishment to a network node (e.g., another cell).

FIG. 8 shows an example of a configuration a CSI-RS resource set according to the present disclosure.

A base station may configure at least one RS resource set for a terminal for a RS for RLM. A configuration for this RS for RLM may be provided for each terminal (i.e., in a terminal-specific way) or commonly to a plurality of terminals. For example, a RS resource may correspond to a CSI-RS resource or a SSB resource/index, and a RS resource set may correspond to a CSI-RS resource set or a SSB resource/index set. In addition, an index may be assigned to each RS resource set.

Although FIG. 8 shows an example assuming that a RS for RLM is a CSI-RS, the present disclosure may configure a RS resource (set) for RLM based on another RS or SSB.

In the example of FIG. 8, one CSI-RS resource may be included in one CSI-RS resource set or may belong to a plurality of different CSI-RS resource sets. One CSI-RS resource set may include one CSI-RS resource or may include a plurality of different CSI-RS resources. The number of CSI-RS resources belonging to a different CSI-RS resource set may be the same or different.

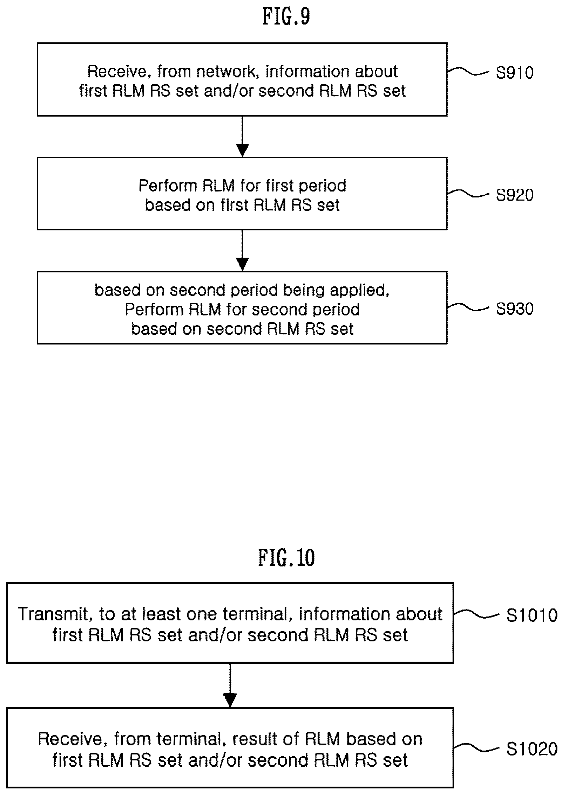

FIG. 9 is a diagram for describing an example of a radio link monitoring operation of a terminal according to the present disclosure.

In S910, a terminal may receive information on the first RLM-RS set and/or the second RLM-RS set from a network.

For example, the first/second RLM-RS set may be preconfigured to a terminal through higher layer (e.g., RRC) signaling. The first RLM-RS set may be configured and the second RLM-RS set may not be configured, or the first RLM-RS set may not be configured and the second RLM-RS set may be configured.

The first RLM-RS set and the second RLM-RS set may be configured for one serving cell of a network.

The first RLM-RS set may include the first at least one RLM-RS resource index. The second RLM-RS set may include the second at least one RLM-RS resource index. Some or all of the first at least one RLM-RS resource index and the second at least one RLM-RS resource index may be the same (or overlap). Alternatively, the first at least one RLM-RS resource index and the second at least one RLM-RS resource index may be different (or not overlap).

The first RLM-RS set may be applied to at least one of at least one frequency domain or at least one antenna port resource of the first period described below. The second RLM-RS set may be applied to at least one of at least one frequency domain or at least one antenna port resource of the second period described below.

A default RLM-RS set that is distinct from the first and second RLM-RS sets may be preconfigured for a terminal. A default RLM-RS set may correspond to a RLM-RS set configured for the existing RLM described above (i.e., not considering NES) (e.g., RS(s) configured by a RadioLinkMonitoringRS parameter).

In S920, a terminal may perform RLM for the first period based on the first RLM-RS set.

For example, RLM for the first period may be performed based on one RLM-RS resource index that is activated among the first RLM-RS sets configured for a terminal.

In S930, a terminal may perform RLM for the second period based on the second RLM-RS set when the second period is applied.

Here, the second period being applied may correspond to one of the following cases. For example, when information indicating the application of the second period is received from a network, the second period may be applied. Alternatively, when one RLM-RS resource index that is activated among the first RLM-RS sets is deactivated, the second period may be applied. Alternatively, when one RLM-RS resource index is activated among the second RLM-RS sets, the second period may be applied.

For example, RLM for the second period may be performed based on one RLM-RS resource index that is activated among the second RLM-RS sets configured for a terminal.

If a configuration for the second RLM-RS set is not provided to a terminal, or when an activated RLM-RS resource index does not exist among the second RLM-RS sets configured for a terminal, a RLM-RS to be applied in the second period may be determined implicitly. For example, a terminal may determine a RS corresponding to a TCI state associated with one CORESET (or one CORESET according to a predetermined criterion among a plurality of CORESETs) (or having the same index as a RS index included in a TCI state) as a RLM-RS. Alternatively, a terminal may determine a RS corresponding to a TCI state determined during a recently performed random access procedure or a RS selected from a recent random access procedure as a RLM-RS. Alternatively, a terminal may determine a RS corresponding to a specific SS/PBCH block index or a specific CSI-RS resource index based on a predetermined criterion as a RLM-RS. Based on a RLM-RS determined in this way, RLM for the second period may be performed.

The first period and/or the second period may be associated with a NES mode for one serving cell. In other words, when a NES mode is applied, RLM may be performed based on one specific RLM-RS within a corresponding RLM-RS set in the first period and/or the second period. When a NES mode is not applied (e.g., in a period other than the first period and the second period), RLM may be performed based on RS(s) included in a default RLM-RS.

In-sync (IS) or out-of-sync (OOS) may be determined based on the result of RLM for the first period or the result of RLM for the second period, and whether to perform RLF may be determined based on the accumulated number of OOSs. IS/OOS/RLF may be determined for each period.

The first RLM parameter set may be applied to RLM for the first period. The second RLM parameter set may be applied to RLM for the second period. The first and second RLM parameter sets may be the same or different.

The first RLM parameter set applied to RLM for the first period and/or the second RLM parameter set applied to RLM for the second period may be distinct from a default RLM parameter set applied to RLM based on a default RLM-RS set. For example, a specific parameter value within the first RLM parameter set may be configured based on a specific parameter value within a default RLM parameter set. For example, the first RLM parameter value may be determined based on an offset value for a default RLM parameter. A specific parameter value within the second RLM parameter set may be configured based on a specific parameter value within a default RLM parameter set (e.g., by offset application).

FIG. 10 is a diagram for describing an example of an operation supporting radio link monitoring of a terminal by a base station according to the present disclosure.

In S1010, a base station may transmit information on the first RLM-RS set and/or the second RLM-RS set to at least one terminal.

The specific characteristics for the first/second RLM-RS set are the same as described by referring to FIG. 9, so an overlapping description is omitted.

In S1020, a base station may receive the result of RLM based on the first RLM-RS set and/or the second RLM-RS set from a terminal.

Here, a terminal that transmits the result of RLM to a base station may be one of at least one terminal that receives information on the first RLM-RS set and/or the second RLM-RS set. For example, when a terminal performs RLM and determines that it is in-sync, it may not report the result of RLM to a base station. Alternatively, when a terminal performs RLM, determines that it is out-of-sync and accumulates it to declare that RLF is detected, it may report relevant information to a base station, and this report may correspond to the result of RLM.

In addition, the result of RLM may include at least one of the result of RLM for the first period based on the first RLM-RS set or the result of RLM for the second period based on the second RLM-RS set. Here, RLM for the second period may be performed in a corresponding terminal based on the second period being applied.

The specific characteristics for RLM in the first/second period are the same as described by referring to FIG. 9, so an overlapping description is omitted.

Hereinafter, various examples of NES-based RLM/RLF according to the present disclosure are described.

Embodiment 1

This embodiment relates to an explicit configuration method for a RLM-RS.

A base station may provide a plurality of RS configurations (i.e., configuration information for a plurality of RLM-RSs) to a terminal for RLM. For example, a plurality of RLM-RSs may correspond to a periodic CSI-RS resource and/or SSB resource. A terminal may perform RLM based on one RLM-RS configuration among a plurality of RLM-RS configurations. Here, a base station may assign a RS index (e.g., #a, #b, ...) to a terminal for each RLM-RS configuration. For example, a RadioLinkMonitoringRS parameter within a higher layer parameter failureDetectionResourcesToAddModList may include a plurality of RLM-RSs (e.g., a RLM-RS configuration to which #a, #b, ... is assigned). Alternatively, a failureDetectionResourcesToAddModList parameter may include a plurality of RLM-RSs (e.g., a RLM-RS configuration to which #a, #b, ... is assigned). Alternatively, a plurality of failureDetectionResourcesToAddModList parameters may be configured, and each failureDetectionResourcesToAddModList may include a different RLM-RS configuration, and for example, the first failureDetectionResourcesToAddModList of a RRC message may include configuration information for RLM-RS #a and the second failureDetectionResourcesToAddModList may include configuration information for RLM-RS #b.

In addition, for a NES operation, a base station may configure a plurality of RLM-RSs for a terminal, and a RS index may be assigned to each RLM-RS. A base station may explicitly (pre)configure a RLM-RS associated per each RS index. According to the explicit configuration/command/indication or implicit rule of a base station, a base station and a terminal may activate only one RS index, i.e., only one RS. A terminal may determine only one specific activated RS as a valid RLM-RS and perform RLM by using only a valid RLM-RS.

For example, a base station may configure a plurality of RLM-RSs through a RRC message and give an indication to activate one RLM-RS among them through DCI or a MAC CE or a RRC message.

As a specific example, RLM-RS #a, #b, ... may be configured through a RRC message, and a RLM-RS (e.g., #b) that is activated or deactivated first may be specified through the same RRC message. A terminal receiving this RRC message may configure a plurality of RLM-RSs and activate or deactivate specific RLM-RS(s) along with it.

As another example, RLM-RS #a, #b, ... may be configured through the first RRC message, and a RLM-RS (e.g., #b) that is activated or deactivated may be specified through DCI or a MAC CE or the second RRC message. A terminal receiving the first RRC message may configure a plurality of RLM-RSs and activate RLM-RS(s) that were deactivated or deactivate RLM-RS(s) that were activated according to DCI or a MAC CE or the second RRC message. When only one RLM-RS may be activated at the same time, the remaining RLM-RS(s) may be deactivated (even without separate configuration/indication) according to the activation of one specific RLM-RS. If two RLM-RSs are configured, another one RLM-RS may be deactivated (even without separate configuration/indication) according to the deactivation of one specific RLM-RS. Alternatively, all RLM-RSs may be configured/indicated to be deactivated or activated through DCI or a MAC CE or the second RRC message.

As another example, when a base station indicates a NES mode or a terminal switches to a NES mode, a terminal may activate only a specific RLM-RS mapped to a NES mode. If a base station indicates a non-NES mode or a terminal switches to a non-NES mode, a terminal may perform RLM by activating only a specific RLM-RS mapped to a non-NES mode or activating other RLM-RS(s) other than a specific RLM-RS mapped to a NES mode. To this end, a base station may configure/indicate a specific RLM-RS mapped to a NES mode. Additionally, a base station may configure/indicate a specific RLM-RS mapped to a non-NES mode.

Embodiment 2

This embodiment relates to an implicit configuration method for a RLM-RS.

When there is no valid RLM-RS within an explicit configuration for a RLM-RS provided by a base station, a terminal may apply an implicit configuration/rule to determine/select a RLM-RS.

When a terminal determines that there is no valid RLM-RS within an explicit configuration for a RLM-RS provided by a base station, it may correspond to at least one of the following cases:

- When a separate configuration for a RLM-RS (e.g., RadioLinkMonitoringRS) is not provided to a terminal;
- In case of handover or cell addition or cell activation, when the activation configuration/indication of a specific RLM-RS is not provided to a terminal from a base station for a corresponding cell (or a target cell);
- When all RLM-RSs provided by a base station through an explicit configuration are deactivated; or
- When all beam resources corresponding to RLM-RSs provided through an explicit configuration are turned off (or deactivated) according to a NES operation

The various examples in which an implicit configuration/rule related to the RLM-RS determination/selection of a terminal is applied are described below.

Embodiment 2-1

A terminal may determine a RLM-RS based on a TCI state associated with a CORESET for PDCCH monitoring. For example, configuration information for a TCI state associated with a CORESET may include QCL information, and QCL information may indicate an identifier/an index for a CSI-RS resource/a SSB resource. In the following description, a CSI-RS resource/a SSB resource indicated by configuration information for a TCI state is referred to as a CSI-RS resource linked to a corresponding TCI state. For example, a terminal may determine/select a periodic CSI-RS (P-CSI-RS) having the same index as a CSI-RS linked to a TCI state associated with a CORESET as a RLM-RS.

For example, when a specific beam is turned off (or deactivated), a base station may change a TCI state (associated with a CORESET) for PDCCH monitoring performed by a corresponding terminal. In this case, a terminal may change a TCI state for PDCCH monitoring (according to a base station's configuration/indication) and perform RLM by determining a RS corresponding to a changed TCI state as a RLM-RS.

Embodiment 2-2

When one CORESET or a plurality of CORESETs are configured for PDCCH monitoring, a terminal may determine/select one CORESET among them according to a specific rule. For example, P-CSI-RS having the same index as a CSI-RS linked to a TCI state associated with a determined/selected CORESET may be determined as a RLM-RS. Alternatively, P-CSI-RS having a QCL relationship with a TCI state associated with a determined/selected CORESET (or with a CSI-RS linked to a corresponding TCI state) may be determined as a RLM-RS.

The examples of a specific rule for one CORESET determined/selected by a terminal (for a RLM-RS) among at least one CORESET for PDCCH monitoring are as follows.

Embodiment 2-2-1

A terminal may determine/select a CORESET having the lowest index among at least one CORESET as one CORESET described above.

Alternatively, a terminal may determine/select a CORESET having the highest index among at least one CORESET as one CORESET described above.

Embodiment 2-2-2

A terminal may determine/select a specific CORESET (or a default CORESET, or a pre-defined CORESET) preconfigured by a base station among at least one CORESET as one CORESET described above.

Alternatively, a terminal may determine/select a default CORESET preconfigured by a base station among at least one CORESET as one CORESET described above.

Alternatively, a terminal may determine/select a pre-defined CORESET among at least one CORESET as one CORESET described above.

Embodiment 2-2-3

When $L_{max}=4$ (here, $L_{max}$ corresponds to the maximum number of SS/PBCH blocks per half frame) and one CORESET is associated with a search space (SS) set with the shortest monitoring periodicity, a terminal may determine/select a corresponding CORESET as one CORESET described above.

Alternatively, when $L_{max}=4$ and a plurality of CORESETs are associated with a SS set with the shortest monitoring periodicity, a terminal may determine/select a CORESET having the lowest index among a plurality of corresponding CORESETs as one CORESET described above.

Alternatively, when $L_{max}=4$ and a plurality of CORESETs are associated with a SS set with the shortest monitoring periodicity, a terminal may determine/select a CORESET having the highest index among a plurality of CORESETs as one CORESET described above.

Embodiment 2-3

A terminal may determine a RLM-RS based on a TCI state associated with a recently performed random access procedure (or RACH procedure).

For example, a terminal may determine a P-CSI-RS having the same index as a CSI-RS linked to a TCI state determined according to a recently performed random access procedure as a RLM-RS.

Alternatively, a terminal may determine a P-CSI-RS having a QCL relationship with a TCI state determined according to a recently performed random access procedure (or with a CSI-RS linked to a corresponding TCI state) as a RLM-RS.

Alternatively, a terminal may determine a CSI-RS selected according to a recently performed random access procedure as a RLM-RS.

Alternatively, a terminal may determine a P-CSI-RS having a QCL relationship with a CSI-RS selected according to a recently performed random access procedure as a RLM-RS.

Embodiment 2-4

A terminal may determine a P-CSI-RS having the same index as the index of a SSB resource that is greater than or equal to/greater than a predetermined threshold (e.g., a threshold for reception strength, reception quality, etc.) as a RLM-RS.

Alternatively, a terminal may determine a P-CSI-RS having a QCL relationship with a CSI-RS having the same index as the index of a SSB resource that is greater than or equal to a predetermined threshold as a RLM-RS.

Embodiment 2-5

A base station may indicate to a terminal whether to turn on/off (or activate/deactivate) a specific SSB resource (or SSB beam) or a specific CSI-RS resource (or CSI-RS beam). In this case, a terminal may determine a P-CSI-RS having the same index as a CSI-RS linked to a TCI state indicated by a base station as being turned on (or activated) as a RLM-RS. Alternatively, a terminal may determine P-CSI-RS having a QCL relationship with a TCI state indicated by a base station as being turned on (or activated) (or with a CSI-RS linked to a corresponding TCI state) as a RLM-RS. For example, a P-CSI-RS linked to the index of a SSB resource indicated as being turned on (or activated) may be determined as a RLM-RS, or a P-CSI-RS having a QCL relationship with a corresponding P-CSI-RS may be determined as a RLM-RS.

Embodiment 3

This embodiment relates to a RLM-related parameter. A RLM-related parameter may include a parameter applied to in-sync (IS) determination, out-of-sync (OOS) determination, RLF detection, etc.

First, a RLM-related parameter for the existing RLM and RLF detection operations is described. After an activated RLM-RS is determined according to examples described in Embodiments 1 and 2, an operation described in "Radio Link Monitoring (RLM) Procedure" described above may be performed based thereon.

In addition, a terminal may perform RLM and RLF detection operations as in Table 7. Table 7 describes requirements applied to RLM for the following PCell/PSCell/deactivated PSCell.

- PCell in standalone (SA), NR NR-dual connectivity (NR-DC) and NR E-UTRA-dual connectivity (NE-DC) operation modes,
- PSCell in NR-DC and E-UTRA NR-dual connectivity (EN-DC) operation modes,
- PSCell deactivated in NR-DC and EN-DC operation modes (if configured).

[Table 7]

A terminal monitors downlink radio link quality based on a reference signal configured as RLM-RS resource(s) in order to detect the downlink radio link quality of a PCell, a PSCell and a deactivated PSCell (when a bfd-and-RLM parameter is configured as true). All configured RLM-RS resources may be SSBs, CSI-RSs or a mixture of SSBs and CSI-RSs. A terminal is not required to perform RLM outside an active DL BWP.

On each RLM-RS resource, a terminal estimates downlink radio link quality and compares it with Qout and Qin for the purpose of monitoring the downlink radio link quality of a cell. When a CORESET used by a terminal to monitor a PDCCH includes two TCI states and a sfnSchemePdcch parameter is set as 'sfnSchemeA' or 'sfnSchemeB' for a terminal, a terminal

estimates single downlink radio link quality to derive a single SNR and compares it with single thresholds Qout and Qin for the purpose of monitoring the downlink radio link quality of cell(s). A method for calculating a single SRN from two TCI states may be determined according to terminal implementation.

Threshold Qout is defined as a level at which a downlink radio link may not be reliably received, and corresponds to an out-of-sync block error rate (BLERout). For SSB-based radio link monitoring, Qout_SSB is derived based on predetermined hypothetical PDCCH transmission parameters. For CSI-RS-based radio link monitoring, Qout_CSI-RS is derived based on other predetermined hypothetical PDCCH transmission parameters.

Qin is defined as the level of downlink radio link quality that may be received with significantly high reliability compared to Qout, and corresponds to an in-sync block error rate (BLERin). For SSB-based radio link monitoring, Qin_SSB is derived based on predetermined hypothetical PDCCH transmission parameters. For CSI-RS-based radio link monitoring, Qin_CSI-RS is derived based on other predetermined hypothetical PDCCH transmission parameters.

BLERout and BLERin are determined from a network configuration through a rlmInSyncOutOfSyncThreshold parameter signaled by a higher layer. When rlmInSyncOutOfSyncThreshold is not configured for a terminal from a network, a terminal determines out-of-sync and in-sync block error rates with BLEout=10% and BLERin=2% corresponding to a predetermined configuration (configuration #0) by default. All requirements are applicable for BLER configuration #0.

A terminal may monitor up to N_RLM RLM-RS resources of the same or a different type depending on the maximum number Lmax of SSBs per half frame in each corresponding carrier frequency range. A N_RLM value is specified as a value satisfying requirements. A terminal is not required to satisfy corresponding requirements when a RLM-RS is not configured and a TCI state for a PDCCH is not activated.

For SSB-based RLM,

- A terminal may evaluate whether downlink radio link quality on a configured RLM-RS resource estimated over the last TEvaluate_out_SSB [ms] period becomes worse than threshold Qout_SSB within a TEvaluate_out_SSB [ms] evaluation period.

- A terminal may evaluate whether downlink radio link quality on a configured RLM-RS resource estimated over the last TEvaluate_in_SSB [ms] period becomes better than threshold Qin_SSB within a TEvaluate_in_SSB [ms] evaluation period.

For CSI-RS-based RLM,

- A terminal may evaluate whether downlink radio link quality on a configured RLM-RS resource estimated over the last TEvaluate_out_CSI-RS [ms] period becomes worse than threshold Qout_CSI-RS within a TEvaluate_out_CSI-RS [ms] evaluation period.

- A terminal may evaluate whether downlink radio link quality on a configured RLM-RS resource estimated over the last TEvaluate_in_CSI-RS [ms] period becomes better than threshold Qin_CSI-RS within a TEvaluate_in_CSI-RS [ms] evaluation period.

In this way, when there is a RS used for RLM or a RS provided (hereinafter, a RS for RLM), a terminal measures a RS for RLM and determines that RLF is finally detected as follows. When it determines that RLF is detected, a terminal reports RLF to a base station as follows or triggers a RRC connection re-establishment procedure. When RRC connection re-establishment is triggered, a cell selection procedure is performed and a random access procedure is performed in a selected cell.

Table 8 describes the detection of a physical layer problem in a RRC_CONNECTED state and the operation of a terminal MAC layer related thereto.

[Table 8]

| A terminal: |
|---|
| 1> when a dual active protocol stack (DAPS) bearer is configured, if receiving N310 consecutive "out-of-sync" indications for a source SpCell from a lower layer while timer T304 is running: |
|     2> starts timer T310 for a source SpCell. |
| 1> if receiving N310 consecutive "out-of-sync" indications for a SpCell from a lower layer while neither T300, T301, T304, T311, T316 nor T319 are running: |
|     2> starts timer T310 for a corresponding SpCell. |
| The recovery of a physical layer problem is performed as follows. |
| If receiving N311 consecutive "in-sync" indications for a SpCell from a lower layer while timer T310 is running, a terminal: |
| 1> stops timer T310 for a corresponding SpCell. |
| 1> stops timer T312 if timer T312 for a corresponding SpCell is running. |
| Here, a terminal may maintain a RRC connection without explicit signaling. In other words, a terminal may maintain the entire radio resource configuration. |
| In addition, a time period where neither "in-sync" nor "out-of-sync" is reported by L1 may not affect the evaluation of the number of consecutive "in-sync" or "out-of-sync" indications. |
| RLF detection is performed as follows. |
| A terminal: |
| 1> if a DAPS bearer is configured and timer T304 is running: |
|     2> when T310 is expired in a source SpCell; or |
|     2> when a random access problem from source MCG MAC is indicated; or |
|     2> when there is an indication from source MCG RLC that the maximum number of retransmissions is reached; or |
|     2> when consistent uplink listen before talk (LBT) failure is indicated from source MCG MAC: |
|         3> considers that radio link failure for source MCG, i.e., source RLF is detected; |
|         3> suspends the transmission and reception of all DRBs and multicast MRBs in source MCG; |
|         3> resets MAC for source MCG; |
|         3> releases a source connection. |
| 1> Else: |
|     2> during a DAPS handover: the following is applied only to a target PCell; |
|     2> when timer T310 is expired in a PCell; or |
|     2> when timer T312 is expired in a PCell; or |
|     2> when a random access problem is indicated from MCG MAC while neither T300, T301, T304, T311 nor T319 are running; or |
|     2> when there is an indication from source MCG RLC that the maximum number of retransmissions is reached; or |
|     2> when connected as an IAB-node, when a BH RLF indication is received on a BAP entity from MCG; or |
|     2> when consistent uplink LBT failure is indicated from MCG MAC while timer T304 is not running: |
|         3> when an indication is from MCG RLC and CA duplication is configured and activated for MCG, for corresponding logical channel allowedServingCells including only SCell(s): |
|             4> initiates a failure information procedure to report RLC failure. |
|         3> Else: |

(continued)

| |
|---|
| 4> considers that radio link failure for MCG, i.e., MCG RLF is detected; |
| 4> discards the segments of a segmented RRC message stored; |
|    4> when AS security is not activated: |
| 5> performs an action into a RRC_IDLE state having a release cause 'other'; |
| 4> else, when AS security is activated, but SRB2 and at least one DRB or multicast MRB or SRB2 for IAB are not setup: |
| 5> stores radio link failure information in VarRLF-Report |
| 5> performs an action into a RRC_IDLE state having a release cause 'RRC connection failure'; |
|    4> Else: |
| 5> stores radio link failure information in VarRLF-Report |
| 5> when timer T316 is configured; and |
| 5> when SCG transmission is not suspended; and |
| 5> when SCG is not deactivated; and |
| 5> when neither PSCell change nor PSCell addition is ongoing (i.e., timer T304 for a NR PSCell is not running in case of NR-DC or timer T307 for an E-UTRA PSCell is not running in case of NE-DC): |
| 6> initiates a MCG failure information procedure to report MCG radio link failure. |
|    5> Else: |
| 6> initiates a connection re-establishment procedure. |

The examples of RLM-related parameters used in an operation described above are as follows:

- TEvaluate_out_SSB : Length of a time period related to OOS evaluation for SSB-based RLM;
- TEvaluate_in_SSB : Length of a period related to IS evaluation for SSB-based RLM;
- TEvaluate_out_CSI-RS : Length of a time period related to OOS evaluation for CSI-RS-based RLM;
- TEvaluate_in_CSI-RS : Length of a period related to IS evaluation for CSI-RS-based RLM;
- rlmInSyncOutOfSyncThreshold : Configuration for thresholds Qout and Qin;
- Qout : Threshold related to OOS evaluation;
- Qin : Threshold related to IS evaluation;
- powerControlOffsetSS : Power offset (dB) of NZP CSI-RS RE to SSS RE;
- nrofPorts : Number of antenna ports;
- rsrp-ThresholdSSB : Threshold for SSB RSRP
- rsrp-ThresholdBFR : Threshold for BFR RSRP
- BLERout: Block error rate related to Qout;
- BLERin: Block error rate related to Qin;
- Hypothetical PDCCH Transmission Parameter: the number of control OFDM symbols, an aggregation level (CCE), the ratio of hypothetical PDCCH RE energy to average SSS RE energy, the ratio of hypothetical PDCCH DMRS energy to average SSS DMRS energy, a bandwidth, subcarrier spacing, DMRS precoder granularity, a REG bundle size, a CP length, REG to CCE mapping, etc.;
- N_LR-RLM: Maximum number of CSI-RS resources or SSB resources related to link recovery (LR) and RLM;
- N_RLM: Maximum number of CSI-RS resources or SSB resources related to RLM;
- Lmax : Maximum number of SS/PBCH blocks per half frame;
- rlf-TimersAndConstants : Configuration for a timer (e.g., T310, T311) and a counter value (e.g., N310, N311) related to RLF;
- T310: Timer that starts to detect a physical layer problem
- N310: Counter that increases by 1 when an out-of-sync indication from a lower layer is received while timer T310 is stopped
- N311: Counter that increases by 1 when an in-sync indication from a lower layer is received while timer T310 is running

For some or all of the RLM-related parameters, a base station may configure a different RLM-related parameter value for each RLM-RS. In this case, a terminal may detect out-of-sync (OOS) or in-sync (IS) or RLF by applying a corresponding value to a RLM-related parameter according to which RLM-RS is valid and activated.

Alternatively, for some or all of the RLM-related parameters, a base station may configure a different RLM-related parameter value according to whether it is a NES mode or a non-NES mode. In this case, a terminal may detect out-of-sync or in-sync or RLF by applying a corresponding value to a RLM-related parameter according to whether a currently indicated or configured mode is a NES mode or a non-NES mode.

Alternatively, for some or all of the RLM-related parameters, a base station may configure a different RLM-related parameter value according to whether specific or some antenna ports (AP) are turned off (or deactivated). In this case, a terminal may detect out-of-sync or in-sync or RLF by applying a corresponding value to a RLM-related parameter according to whether specific or some APs are turned off.

Alternatively, for some or all of the RLM-related parameters, a base station may configure a different RLM-related parameter value according to whether the transmission power of specific or some APs is reduced. In this case, a terminal may detect out-of-sync or in-sync or RLF by applying a corresponding value to a RLM-related parameter according to whether the transmission power of specific or some APs is reduced.

In this regard, a base station may notify a terminal of which AP is turned off, and/or which AP's transmission power is reduced, and/or which AP is turned on, and/or which AP's transmission power is increased or changed to normal power. This notification may be delivered to a terminal through DCI or a MAC CE or a RRC message.

In this case, when specific or some APs are turned off, a terminal may be configured to detect IS/OOS/RLF by measuring L1-RSRP while excluding corresponding APs. When specific or some APs are not turned off, a terminal may be configured to detect IS/OOS/RLF by measuring L1-RSRP without excluding (i.e., by including) corresponding APs. Similarly, when the transmission power of specific or some APs is reduced, a terminal may be configured to detect IS/OOS/RLF by measuring L1-RSRP while excluding corresponding APs. When the transmission power of specific or some APs is not reduced, a terminal may be configured to detect IS/OOS/RLF by measuring L1-RSRP without excluding (i.e., by including) corresponding APs.

Additionally or alternatively, a terminal may detect IS/OOS/RLF by applying an offset value to a value configured by a base station for at least one of the above-described RLM-related parameters when a specific RS resource set is valid and activated, and may detect IS/OOS/RLF by applying a value configured by a base station (i.e., without applying an offset) when another RS resource set is valid and activated. Here, an offset may have a positive value or a negative value.

Additionally or alternatively, a terminal may detect IS/OOS/RLF by applying a positive or negative offset value to a value configured by a base station for at least one of the above-described RLM-related parameters when configured/indicated in a NES mode, and may detect IS/OOS/RLF by applying a value configured by a base station (i.e., without applying an offset) when configured/indicated in a non-NES mode.

Additionally or alternatively, a terminal may detect IS/OOS/RLF by applying a positive or negative offset value to a value configured by a base station for at least one of the above-described RLM-related parameters when any AP is turned off, and may detect IS/OOS/RLF by applying a value configured by a base station (i.e., without applying an offset) when any AP is not turned off.

Additionally or alternatively, a terminal may detect IS/OOS/RLF by applying a positive or negative offset value to a value configured by a base station for at least one of the above-described RLM-related parameters when the transmission power of any AP is reduced, and may detect IS/OOS/RLF by applying a value configured by a base station (i.e., without applying an offset) when the transmission power of any AP is not reduced.

In examples described above, an offset value may be configured by a base station. An offset value may be configured per specific unit. For example, a specific unit may be defined by a combination of at least one of a cell, a BWP, a frequency resource, a RS for RLF, an AP, an AP group or an antenna element group.

General Device to which the Present Disclosure may be applied

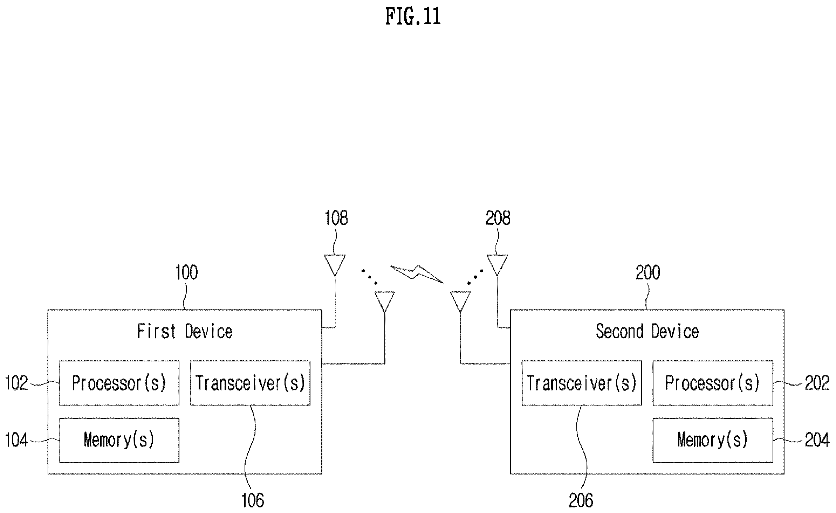

FIG. 11 is a diagram which illustrates a block diagram of a wireless communication system according to an embodiment of the present disclosure.

In reference to FIG. 11, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/-circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a terminal in a wireless communication system, the method comprising:

    receiving, from a network, information about at least one of a first radio link monitoring reference signal (RLM-RS) set or a second RLM-RS set;
    performing a RLM for a first period based on the first RLM-RS set; and
    based on a second period being applied, performing a RLM for the second period based on the second RLM-RS set.

2. The method of Claim 1, wherein:
    based on one RLM-RS resource index activated of the first RLM-RS set configured for the terminal, the RLM for the first period is performed.

3. The method of Claim 1, wherein:
    based on one RLM-RS resource index activated of the second RLM-RS set configured for the terminal, the RLM for the second period is performed.

4. The method of Claim 1, wherein based on a configuration for the second RLM-RS set not being provided to the terminal, or based on a RLM-RS resource index activated of the second RLM-RS set configured for the terminal not being present:
    the RLM for the second period is performed based on a RLM-RS resource index corresponding to:

    a transmission configuration indicator (TCI) state associated with a specific control resource set (CORESET);
    a TCI state associated with a recent random access procedure;
    a synchronization signal/physical broadcast channel (SS/PBCH) block index or a channel state information-reference signal (CSI-RS) resource index selected from the recent random access procedure; or
    a specific SS/PBCH block index or CSI-RS resource index based on a predetermined criterion.

5. The method of Claim 1, wherein the second period being applied is based on:

    information indicating an application of the second period being received from the network;
    one RLM-RS resource index activated of the first RLM-RS set being deactivated; or
    one RLM-RS resource index of the second RLM-RS set being activated.

6. The method of Claim 1, wherein:
    at least one of the first period or the second period is associated with a network energy saving (NES) mode for one serving cell of the network.

7. The method of Claim 1, wherein:

    in-sync (IS) or out-of-sync (OOS) is determined based on a result of the RLM for the first period or a result of the RLM for the second period, and
    whether of a radio link failure (RLF) is determined based on at least one OOS.

8. The method of Claim 1, wherein:
    a first RLM parameter set applied to the RLM for the first period and a second RLM parameter set applied to the RLM for the second period are equal or different.

9. The method of Claim 1, wherein:
    a default RLM-RS set applied to a period other than the first period and the second period is configured for the terminal.

**10.** The method of Claim 9, wherein:
at least one of a first RLM parameter set applied to the RLM for the first period, or a second RLM parameter set applied to the RLM for the second period is distinct from a default RLM parameter set applied to a RLM based on the default RLM-RS set.

**11.** The method of Claim 10, wherein:
at least one of a specific parameter value within the first RLM parameter set, or a specific parameter value within the second RLM parameter set is configured based on a specific parameter value within the default RLM parameter set.

**12.** The method of Claim 1, wherein:
the first RLM-RS set and the second RLM-RS set are configured for one serving cell of the network.

**13.** The method of Claim 1, wherein based on the first RLM-RS set including a first at least one RLM-RS resource index, and the second RLM-RS set including a second at least one RLM-RS resource index:

a part or all of the first at least one RLM-RS resource index and the second at least one RLM-RS resource index are equal, or
the first at least one RLM-RS resource index and the second at least one RLM-RS resource index are different.

**14.** The method of Claim 1, wherein:

the first RLM-RS set is applied to at least one of at least one frequency domain or at least one antenna port resource of the first period, and
the second RLM-RS set is applied to at least one of at least one frequency domain or at least one antenna port resource of the second period.

**15.** A terminal in a wireless communication system, the terminal comprising:

at least one transceiver; and
at least one processor coupled to the at least one transceiver,
wherein the at least one processor is configured to:

receive, through the at least one transceiver, from a network, information about at least one of a first radio link monitoring reference signal (RLM-RS) set or a second RLM-RS set;
perform a RLM for a first period based on the first RLM-RS set; and
based on a second period being applied, perform a RLM for the second period based on the second RLM-RS set.

**16.** A method performed by a base station in a wireless communication system, the method comprising:

transmitting, to at least one terminal, information about at least one of a first radio link monitoring reference signal (RLM-RS) set or a second RLM-RS set; and
receiving a result of a RLM based on at least one of the first RLM-RS set or the second RLM-RS set from one terminal of the at least one terminal,
wherein the result of the RLM includes at least one of a result of a RLM for a first period based on the first RLM-RS set, or a result of a RLM for a second period based on the second RLM-RS set, and
wherein the RLM for the second period is performed based on the second period being applied.

**17.** A base station in a wireless communication system, the base station comprising:

at least one transceiver; and
at least one processor coupled to the at least one transceiver,
wherein the at least one processor is configured to:

transmit, through the at least one transceiver, to at least one terminal, information about at least one of a first radio link monitoring reference signal (RLM-RS) set or a second RLM-RS set; and
receive, through the at least one transceiver, a result of a RLM based on at least one of the first RLM-RS set or the second RLM-RS set from one terminal of the at least one terminal,

wherein the result of the RLM includes at least one of a result of a RLM for a first period based on the first RLM-RS set, or a result of a RLM for a second period based on the second RLM-RS set, and
wherein the RLM for the second period is performed based on the second period being applied.

18. A processing device configured to control a terminal which performs a measurement in a wireless communication system, the processing device comprising:

at least one processor; and
at least one computer memory operably connected to the at least one processor, and based on being executed by the at least one processor, storing instructions for performing a method according to any one of Claim 1 to Claim 14.

19. At least one non-transitory computer readable medium storing at least one instruction, wherein:
the at least one instruction controls a device performing an uplink transmission in a wireless communication system to perform a method according to any one of Claim 1 to Claim 14 by being executed by at least one processor.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

## FIG.5

Resource grid

## FIG.6

| | | | | |
|---|---|---|---|---|
| INITIAL CELL SEARCH | SYSTEM INFORMATION RECEPTION | RANDOM ACCESS PROCEDURE | | GENERAL DL/UL Tx/Rx |

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S601    S602    S603    S604    S605    S606    S607    S608

· DL/UL ACK/NACK
· UE CQI/PMI RI REPORT
   USING PUSCH AND PUCCH

# FIG.7

Terminal                                                    Network node

RRC configuration                    S710

NES mode activation                  S720

NES mode-based RLM-RS                 S730

RLM-RS measurement    S740

RLF detection         S750

Cell selection        S760

Random access procedure for RRC
connection re-establishment request    S770

# FIG.8

CSI-RS resource #1

CSI-RS resource #2

CSI-RS resource #3

CSI-RS resource #4

⋮

CSI-RS resource #n

CSI-RS resource set #1

CSI-RS resource set #2

CSI-RS resource set #3

## FIG.9

Receive, from network, information about
first RLM RS set and/or second RLM RS set —— S910

Perform RLM for first period
based on first RLM RS set —— S920

based on second period being applied,
Perform RLM for second period
based on second RLM RS set —— S930

## FIG.10

Transmit, to at least one terminal, information about
first RLM RS set and/or second RLM RS set —— S1010

Receive, from terminal, result of RLM based on
first RLM RS set and/or second RLM RS set —— S1020

FIG.11

EP 4 668 831 A1

## INTERNATIONAL SEARCH REPORT

International application No.

**PCT/KR2024/095349**

| A. | CLASSIFICATION OF SUBJECT MATTER |
|---|---|

**H04W 24/08**(2009.01)i; **H04W 76/18**(2018.01)i; **H04W 72/231**(2023.01)i; **H04W 72/232**(2023.01)i; **H04W 52/02**(2009.01)i; **H04B 7/06**(2006.01)i; **H04B 7/08**(2006.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04W 24/08(2009.01); H04B 17/309(2015.01); H04B 7/06(2006.01); H04L 5/00(2006.01); H04W 76/27(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RLM, 세트(set), 측정(measurement), 활성화(activation)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br><br>A | US 11581930 B2 (TELEFONAKTIEBOLAGET LM ERICSSON (PUBL)) 14 February 2023 (2023-02-14)<br>See column 14, line 5 - column 15, line 27 and column 19, lines 1-18; and claims 1-10. | 1-3,5-6,8-9,12-19<br><br>4,7,10-11 |
| Y | MODERATOR (INTEL CORPORATION). Discussion Summary #3 for energy saving techniques of NW energy saving SI. R1-2212779, 3GPP TSG RAN WG1 Meeting #111. 21 November 2022.<br>See section 2.4.1. | 1-3,5-6,8-9,12-19 |
| Y | HUAWEI et al. [Offline-611][POS] Summary on support of non-periodic SRS cases. R2-2001935, 3GPP TSG RAN WG2 Meeting #109-e. 11 March 2020.<br>See section 2.2. | 5 |
| Y | US 2021-0288728 A1 (QUALCOMM INCORPORATED) 16 September 2021 (2021-09-16)<br>See paragraphs [0067]-[0078]; and claims 1-22. | 9 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **27 May 2024** | **27 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/095349** |

### C.     DOCUMENTS CONSIDERED TO BE RELEVANT

| Category* | Citation of document, with indication, where appropriate, of the relevant passages | Relevant to claim No. |
|---|---|---|
| A | SAMSUNG. Network energy saving techniques. R1-2212057, 3GPP TSG RAN WG1 Meeting #111. 07 November 2022.<br>    See sections 3.2 and 5.4. | 1-19 |

Form PCT/ISA/210 (second sheet) (July 2022)

**INTERNATIONAL SEARCH REPORT**
Information on patent family members

International application No.

**PCT/KR2024/095349**

| Patent document cited in search report | | | Publication date (day/month/year) | Patent family member(s) | | | Publication date (day/month/year) |
|---|---|---|---|---|---|---|---|
| US | 11581930 | B2 | 14 February 2023 | CA | 3091207 | A1 | 29 August 2019 |
| | | | | CN | 112042147 | A | 04 December 2020 |
| | | | | CN | 112042147 | B | 10 November 2023 |
| | | | | EP | 3759857 | A1 | 06 January 2021 |
| | | | | JP | 2021-521662 | A | 26 August 2021 |
| | | | | JP | 7158490 | B2 | 21 October 2022 |
| | | | | KR | 10-2020-0121881 | A | 26 October 2020 |
| | | | | KR | 10-2023-0162141 | A | 28 November 2023 |
| | | | | MX | 2020008636 | A | 21 September 2020 |
| | | | | US | 2020-0395989 | A1 | 17 December 2020 |
| | | | | WO | 2019-162917 | A1 | 29 August 2019 |
| US | 2021-0288728 | A1 | 16 September 2021 | AU | 2019-222750 | A1 | 13 August 2020 |
| | | | | AU | 2019-222750 | B2 | 28 July 2022 |
| | | | | BR | 112020016615 | A2 | 22 December 2020 |
| | | | | CN | 111771391 | A | 13 October 2020 |
| | | | | CN | 111771391 | B | 05 January 2024 |
| | | | | CN | 117580072 | A | 20 February 2024 |
| | | | | EP | 3753279 | A1 | 23 December 2020 |
| | | | | EP | 3753279 | B1 | 16 November 2022 |
| | | | | JP | 2021-514156 | A | 03 June 2021 |
| | | | | JP | 7078736 | B2 | 31 May 2022 |
| | | | | KR | 10-2020-0119810 | A | 20 October 2020 |
| | | | | KR | 10-2022-0038805 | A | 29 March 2022 |
| | | | | KR | 10-2429932 | B1 | 04 August 2022 |
| | | | | SG | 11202006795 | A | 28 August 2020 |
| | | | | TW | 201937980 | A | 16 September 2019 |
| | | | | TW | I771566 | B | 21 July 2022 |
| | | | | US | 11025348 | B2 | 01 June 2021 |
| | | | | US | 11838066 | B2 | 05 December 2023 |
| | | | | US | 2019-0260484 | A1 | 22 August 2019 |
| | | | | WO | 2019-161070 | A1 | 22 August 2019 |

Form PCT/ISA/210 (patent family annex) (July 2022)